Europäisches Patentamt

European Patent Office

Office européen des brevets

(11) Publication number: **0 020 100**
A1

(12) **EUROPEAN PATENT APPLICATION**

(21) Application number: 80301706.0

(22) Date of filing: 22.05.80

(51) Int. Cl.³: **B 01 D 33/04,** B 01 D 29/02

(30) Priority: 25.05.79 ZA 792577

(43) Date of publication of application: 10.12.80
Bulletin 80/25

(84) Designated Contracting States: AT BE CH DE FR GB IT LI LU NL SE

(71) Applicant: BATEMAN EQUIPMENT LIMITED, Founders Building, Bartlett Road, Boksburg North Transvaal (ZA)

(72) Inventor: Shears, Barry Edward Graham, Seven Acres Clymping, Littlehampton Sussex (GB)

(74) Representative: Needle, Jacqueline et al, Page, White & Farrer 27 Chancery Lane, London WC2A 1NT (GB)

(54) **Endless conveyor belt filter.**

(57) A belt filter including an endless conveyor belt (1) adapted to be driven along a closed path including an operative run (33a) and a return run (33b), the conveyor belt (1) including apertures (8) therethrough over at least a major portion of its surface area; and filter cloth (9) over the outer surface of the conveyor belt (1), the filter cloth (9) being attached to the conveyor belt (1) along the operative and return runs (33a, 33b) of the conveyor belt (1) and being movable longitudinally with the conveyor belt (1) along substantially the same closed path.

0020100

- 1 -

BELT FILTERS

This invention relates to belt filters.

Continuous belt filters are well known for the separation of liquids from slurries and other solids-liquid mixtures. Normally, such a belt filter comprises a relatively heavy endless conveyor belt of rubber or like material which is adapted to be continuously driven along a closed path including an operative filtering run and a return run. A separate endless filter belt of suitable filter material is located round the conveyor belt and is carried on the upper outer face of the conveyor belt along its operative run for longitudinal movement

0020100

- 2 -

with the conveyor belt. The filter belt separates from the conveyor belt along the return run.

A series of filtrate conveying grooves extending transversely to the direction of travel of the conveyor belt are normally provided in substantially parallel spaced relationship to each other in the outer face of the conveyor belt along the entire length of the conveyor belt. An aperture extends through the conveyor belt from the bottom of each groove in a central zone of the groove thereby to provide a longitudinally extending row of spaced drainage apertures through the conveyor belt. Along the operative run of the conveyor belt the filter belt rests on ridges defined between the filtrate conveying grooves.

In use, a slurry or other solids-liquid feed material is located on the filter belt along the operative run and filtrate passes through the filter belt, along the transverse grooves in the conveyor belt and through the row of apertures through the conveyor belt. A precipitate is retained on the filter belt along the operative run and forms a filter cake which is carried along and discharged from the moving filter belt. Along the return run the filter belt separates from the conveyor belt to facilitate effective cleaning.

In certain applications a vacuum chamber is provided below the conveyor belt along its operative run to transmit a suction effect to the slurry on the filter belt through the apertures and the grooves in the conveyor belt and through the filter belt from a vacuum pump connected to the vacuum chamber. Filtrate is then drawn from the slurry through the filter belt, along the transverse grooves in the conveyor belt and through the row of apertures in the conveyor belt and into the vacuum chamber for withdrawal by the vacuum pump.

A belt filter as described above and its associated operating equipment is normally of a relatively bulky and complex construction which is relatively expensive. Straight tracking of the conveyor belt and the separate filter belt normally presents

- 4 -

problems and ancillary belt tracking mechanisms are normally required.

Furthermore, problems of hydraulic capacity are normally experienced to obtain a free flow of filtrate along the transverse grooves and drainage apertures in the conveyor belt.

U S A patent 2 880 875 discloses filtration apparatus in which a movable endless filter belt of flexible filter fabric is located between and drivingly carried by a pair of transversely spaced and endless swivel conveyor chains. Opposite edges of the filter belt are attached by springs to the swivel conveyor chains which are adapted to be driven by a set of drive sprockets. Along the operative run of the filter belt, the spacing of the conveyor chains is such that the filter belt forms a basin for receiving the liquid that is filtered.

Along the operative run the bottom of the filter belt is supported on a separate endless open mesh support belt to prevent distortion and strain in the filter belt and its connecting springs. The support belt is driven at the same rate of speed as but independently of the filter belt. The support belt separates from the filter belt along the return run to permit washing of the filter fabric.

U S A 2 880 875 also discloses that where the depth of the filter basin exceeds a certain value, the filter belt may be reinforced and held by a fabric net which is secured along opposite edges to the pair of spaced conveyor chains which carry the filter belt, so that the fabric net travels along with the filter belt and provides added support to the sides of the filter belt when the latter is subjected to the weight of the material to be filtered.

The arrangement of U S A 2 880 875 is also relatively complex in construction and provides a filter belt which separates from a support belt along the return run.

It is an object of the present invention to provide an improved belt filter with which the above disadvantages are avoided or at least minimized.

According to the invention a belt filter includes an endless conveyor belt adapted to be driven along a closed path including an operative run and a return run, the conveyor belt including apertures therethrough over at least a major portion of its surface area; and filter cloth over the outer surface of the conveyor belt, the filter cloth being attached to the conveyor belt along the operative and return runs of the conveyor belt and being movable longitudinally with the conveyor belt along substantially the same closed path.

With the arrangement according to the invention, the filter cloth does not separate from the conveyor belt along its return run. Since the conveyor belt is provided with apertures therethrough over at least a major portion of its surface area, effective washing of the filter cloth may be effected along the return run without separation of the filter cloth from the conveyor belt.

Also, filtrate may pass directly from the filter cloth through apertures in the conveyor belt over at least a major portion of the surface area of the conveyor belt along its operative run, thereby reducing hydraulic resistance to a minimum.

The conveyor belt may comprise an open grid-like or mesh-like structure which is flexible transversely to permit the conveyor belt to travel along arcuate paths between corresponding ends of the operative and return runs.

A grid-like structure may comprise a plurality of elongate elements each of which are bent back and forth in spaced positions along its length, the elements being interlaced in pairs in bent zones to define a grid-like structure with major portions of the elements extending transversely to the direction of travel of the conveyor belt and minor portions of the elements extending along the direction of travel, the elements being articulated at the

- 8 -

interlaced zones to permit the grid-like structure to flex about axes extending transversely to the direction of travel.

The filter may include drive means engageable with the conveyor belt, the engagement between the drive means and the conveyor belt acting to track the longitudinal movement of the conveyor belt.

The drive means may comprise at least one sprocket engaging in apertures through the conveyor belt and the conveyor belt may include at least one longitudinally extending guide formation adapted to co-operate with the sprocket to inhibit lateral movement of the conveyor belt.

With the arrangement of the previous paragraph, a positive drive with positive tracking of the conveyor belt and thus also of the filter cloth which is attached to the conveyor belt, may be obtained by means of one or more sprockets without the need for ancillary conveyor belt and filter cloth tracking mechanisms.

The drive sprocket may be located towards one end of the operative run of the conveyor belt and at least one idler sprocket engageable in apertures through the conveyor belt may be located towards the opposite end of the operative run of the conveyor belt, the guide formation on the conveyor belt also being adapted to co-operate with the idler sprocket to inhibit lateral movement of the conveyor belt.

The guide formation on the conveyor belt may be constituted by longitudinally disposed portions of the surrounds of a row of apertures extending along the conveyor belt.

The filter may include support means for the conveyor belt-filter cloth combination to prevent or at least minimize sagging thereof along the operative run. The support means may comprise one or more longitudinally and/or transversely extending supports. A transversely extending support may comprise a roller.

A pair of guide formations for the opposite longitudinally extending edges of the conveyor belt may be provided along the operative run.

The guide formations may be made from any suitable material with a low coefficient of friction, such as a suitable synthetic resinous material.

The guide formations may be replaceable.

The guide formations may comprise a pair of transversely spaced and inwardly facing channel shaped formations in which the opposite edges of the conveyor belt are located slidably.

A belt filter according to the invention may comprise a vacuum filter and may include a vacuum chamber located below the operative run of the conveyor belt and including an inlet extending along at least part of the operative run of the conveyor belt and extending over at least a major portion of the width of the conveyor belt-filter cloth combination so that apertures through the conveyor belt which pass along the vacuum chamber during operation are located in registration with the inlet.

The opposite, longitudinal edge zones of the filter cloth may be unattached along the entire length of the conveyor belt, the unattached edges of the filter cloth being turned upwardly away from the conveyor belt along the operative run and located in sliding engagement with side formations which are mounted on the vacuum chamber in air-tight relationship therewith.

With this arrangement an effective edge seal may be obtained when a solids/liquid feed material is located on the operative run of the belt/cloth combination, the feed material urging the upturned edges of the filter cloth into sealing engagement with the side formations so that no air can be drawn into the vacuum chamber except through the feed material on the filter cloth.

The side formations may be made from any suitable material having a low coefficient of friction. For example, the side formations may be made from a suitable synthetic resinous material.

The side formations may be replaceable.

Each side formation may include a replaceable lining on which an unattached edge of the filter cloth is slidable, the replaceable lining comprising a material having a low coefficient of friction.

Any suitable end sealing means may be provided transversely to the direction of travel of the conveyor belt at or near opposite ends of the vacuum chamber.

For a clear understanding of the invention a preferred embodiment will now be described, purely by way of example, with reference to the accompanying drawings in which:-

Figure 1   is a diagrammatic elevational view of a continuous vacuum belt filter according to the invention.

Figure 2   is a diagrammatic and fragmentary
          perspective view (with parts broken away)
          of the drive end of a conveyor belt-filter
          cloth combination according to the
          invention.

Figure 3   is a diagrammatic and fragmentary plan
          view of the conveyor belt of figure 2
          illustrating in greater detail the
          construction thereof.

Figure 4   is a diagrammatic an fragmentary cross-
          sectional view of the belt filter on the
          line IV - IV in figure 1, illustrating one
          embodiment of guide means for the
          longitudinal edges of the conveyor belt on
          the vacuum chamber.

Figure 5   is a diagrammatic and fragmentary
          cross-sectional view to an enlarged scale
          of the belt filter of figure 1,

- 14 -

illustrating an alternative embodiment of guide means for the longitudinal edges of the conveyor belt on the vacuum chamber.

Figure 6    is a diagrammatic and fragmentary longitudinal vertical sectional view of the vacuum chamber of the belt filter of figure 1, illustrating transverse vacuum sealing arrangements at opposite ends of the vacuum chamber of the filter.

Figure 7    is a section on the line VII -VII in figure 6.

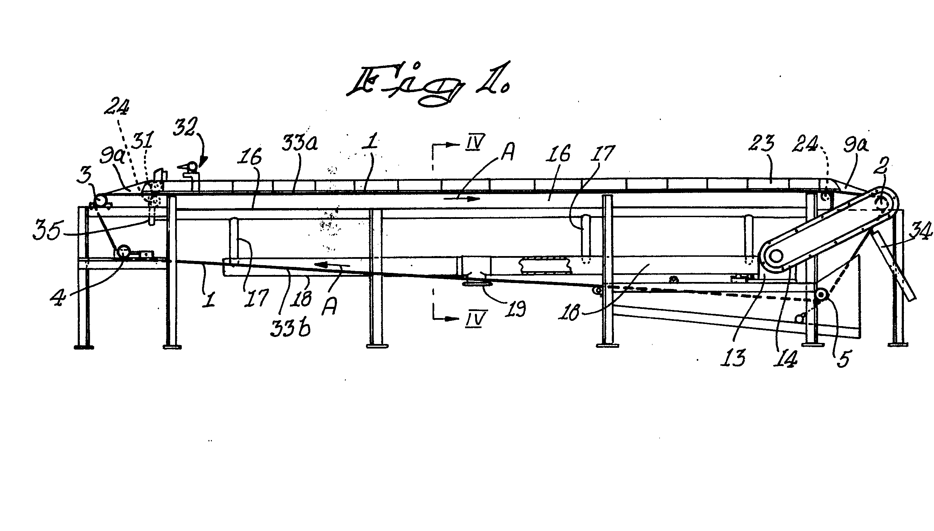

As shown in figure 1, the continuous vacuum belt filter comprises endless conveyor belt 1 which is mounted on a set of drive sprockets 2 and spaced sets of idler sprockets 3, 4 and 5 for movement in the direction of arrows A along a closed path including an operative run 33a and a return run 33b.

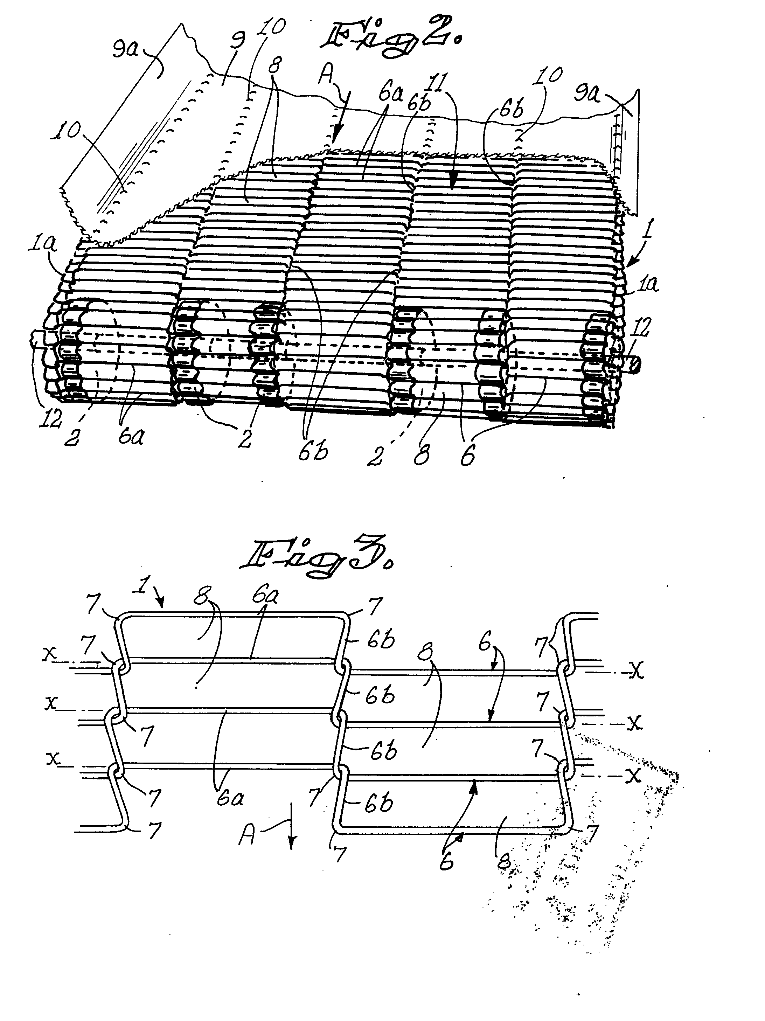

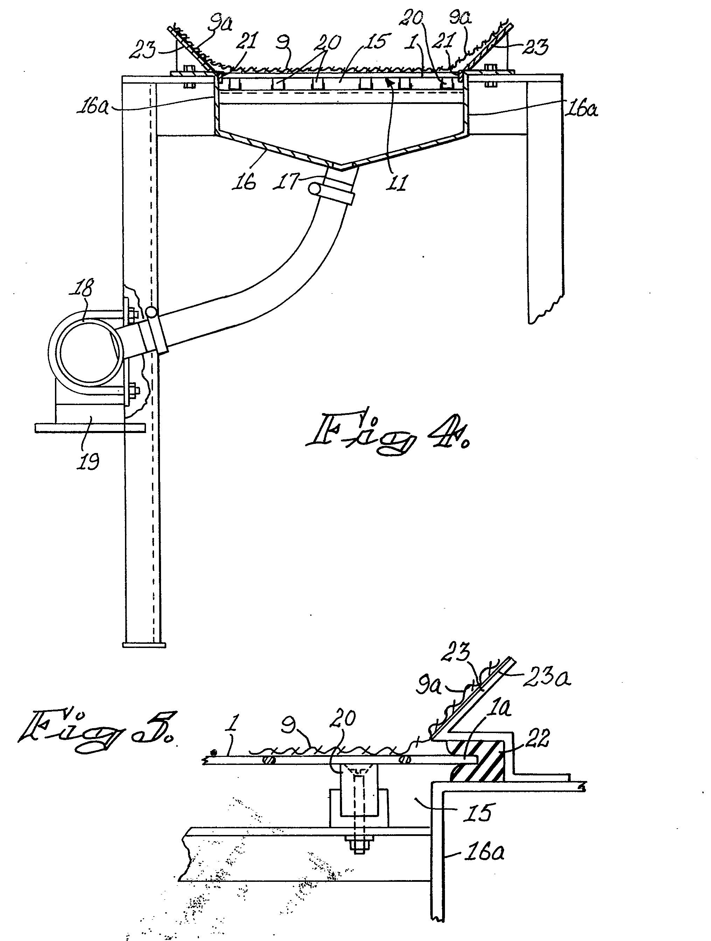

As shown in figures 2 and 3, conveyor belt 1 is of an open grid-like construction and comprises a plurality of elongate wire elements 6 each of which is bent back and forth in spaced zones 7 along its length as can best be seen in figure 3. The wire elements 6 are interlaced in pairs at bent zones 7 to define a grid-like structure with major portions 6a of the wire elements 6 extending transversely to the direction of travel of belt 1 as indicated by arrow A and minor portions 6b of the wire elements 6 extend along the direction of travel. Wire elements 6 are articulated at interlaced zones 7 to permit the grid-like structure to flex about axes X-X extending transversely to the direction of travel.

It will be appreciated that the articulated wire elements 6 define apertures 8 extending over a major portion of the surface area of belt 1.

A filter cloth 9 is located over the outer surface of the conveyor belt 1 along its entire length and width. Filter cloth 9 comprises any suitable flexible, liquid pervious filter material, such as woven cloth or synthetic fibre filter fabric.

- 16 -

Filter cloth 9 is secured to the wire elements 6 in any suitable manner, such as by stitching 10, so that filter cloth 9 is attached to conveyor belt 1 along both the operative and return runs of the latter and is movable with conveyor belt 1 along the same closed path. The filter cloth 9 is attached to belt 1 in a longitudinally extending central zone 11 of the latter with the longitudinally extending edge zones 9a of the filter cloth 9 being left unattached as will be described in greater detail below.

Continuous wire belt 1, together with filter cloth 9 is driven in the direction of arrow A along the operative run 33a of belt 1 by means of a plurality of transversely spaced drive sprockets 2 drivingly mounted on transverse drive shaft 12. The teeth of sprockets 2 are of such a size and shape and are so spaced that they can engage in successive apertures 8 located along the length of belt 1 between successive major portions 6a of wire elements 6. A direct positive drive of belt 1 can be obtained. Drive shaft 12 is rotatably driven from motor 13 via chain drive 14.

As can be seen in figure 2, sprockets 2 are located adjacent to the minor portions 6b of wire elements 6 so that positive tracking of the belt/cloth combination 1, 9 can be achieved without ancillary belt and cloth tracking mechanisms being required. The minor portions 6b of wire elements 6 which comprise longitudinally disposed portions of the surrounds of the rows of apertures 8 which extend longitudinally along belt 1, constitute longitudinally extending guide formations adapted to co-operate with drive sprockets 2 to inhibit lateral movement of the wire belt 1. Since filter cloth 9 is attached to wire belt 1, separate tracking of filter cloth 9 is not required.

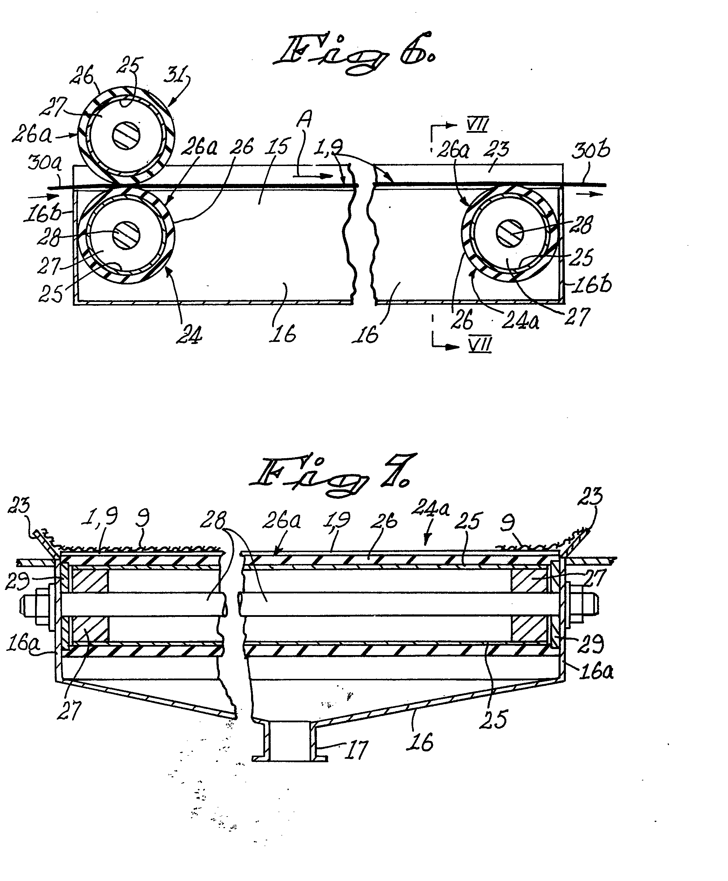

As can be seen in figure 4, the operative run of the belt/cloth combination 1, 9 is located over the elongate inlet 15 in the top of vacuum chamber 16 which extends along the operative run. Vacuum chamber 16 is provided with a plurality of bottom outlets 17 which are connected to outlet manifold 18 which in turn is provided with outlet coupling

- 18 -

19 for connection to a vacuum pump (not shown).

It will be seen that the cross-sectional width of
vacuum chamber 16 and also of its inlet 15 is
substantially the same as that of wire belt 1.

A plurality of transversely spaced elongate runner
elements 20 extending longitudinally along vacuum
chamber 16 and belt 1, are provided in vacuum
chamber 16 to support belt 1 and filter cloth 9 in
order to prevent them  from sagging downwardly into
chamber 16.

As shown in figure 4, a pair of elongate,
replaceable wear strips 21 of suitable material with
a low coefficient of friction, are removably mounted
on the longtudinally extending side walls 16a of
vacuum chamber 16 along opposite sides of inlet 15
into vacuum chamber 16 in positions adjacent the
opposite longitudinally extending side edges 1a of
belt 1.  Wear strips 21 not only act to protect side
walls 16a of vacuum chamber 16 from wear by wire
belt 1, but also as guides for the opposide edges 1a

of belt 1.

In the alternative arrangement shown in figure 5, a pair of inwardly facing, channel shaped and elongate guide formations 22 which are made of any suitable material with a low coefficient of friction, are removably mounted along opposite sides of the inlet 15 into vacuum chamber 16. The opposite, longitudinally extending side edges 1a of belt 1 are slidably located in guide formations 22 along the operative run of belt 1.

As stated above, the opposite, longitudinally extending side edges 9a of filter cloth 9 are not attached to belt 1 and along the operative run these side edges 9a are turned upwardly away from belt 1 and are located in sliding engagement with inclined side formations 23 which are mounted on vacuum chamber 16 in air-tight relationship therewith on opposite sides of its inlet 15 as shown in figures 4 and 5. The side formations 23 may be made of a material having a low coefficient of friction (figure 4) or may be provided with a replaceable lining 23a which is made of material having a low coefficient of friction as shown in figure 5.

When a solids/liquid feed material (not shown) is located on the operative run of the belt/cloth combination 1, 9 the feed material urges the upturned edges 9a of filter cloth 9 into sealing engagement with side formations 23, so that when a vacuum is drawn in chamber 16 by means of the vacuum pump, no air can be drawn into vacuum chamber 16 except through the feed material on the filter cloth. An effective vacuum seal can thus be obtained between vacuum chamber 16 and the belt/cloth combination 1, 9 along the longitudinal side edges of the belt/cloth combination.

As shown in figure 1, feed means 32 is provided above filter cloth 9 in a position down stream of the feed end 35a of vacuum chamber 16 for the continuous supply of a solids-liquid feed material onto filter cloth 9 as the latter continuously moves past feed means 32.

As shown in figures 6 and 7, transverse end sealing is provided by means of sealing rollers 24, 24a which are located transversely to the direction of travel of belt 1 within vacuum chamber 16 at opposite ends of the inlet 15 into vacuum chamber 16. Each roller 24, 24a comprises a rigid tube 25 which is embraced by an outer sleeve 26 of closed cell, resilient foam rubber or like material with a smooth and continuous external peripheral surface 26a. A pair of bushes 27 of high density synthetic resinous material are located tightly in tube 25 at opposite ends thereof for rotation therewith and are rotatably mounted on a spindle 28 which is mounted between the side walls 16a of vacuum chamber 16 at the appropriate end thereof.

As can be seen in figure 7, the length of rigid tube 25 is less than the width of vacuum chamber 16 measured between the longitudinally disposed inner faces of its side walls 16a, whereas resilient sleeve 26 has a length greater than the width of vacuum chamber 16. A washer 29 of polytetrafluoroethylene having a low coefficient of friction is located round spindle 28 against the inner face of each side wall 16a. The ends of resilient sleeve 26 bear against washers 29 and against the inner faces of vacuum chamber side walls 16a and are rotatable relative thereto. There is a clearance between the ends of rigid tube 25 and washers 29, but due to its length resilient sleeve 26 is compressed longitudinally so that the outer ends of resilient sleeve 26 are biassed outwardly into sealing engagement with washers 29 and the inner faces of vacuum chamber side walls 16a. An effective vacuum seal can thus be obtained between the ends of rollers 24, 24a and the side walls 16a of vacuum chamber 16.

Rollers 24, 24a are located so that in their upper zones, the outer periphery 26a of the resilient sleeve 26 of each of rollers 24, 24a is located slightly above the level at which wire belt 1 is supported so that the material of the resilient sleeve 26 is urged against wire elements 6 of belt 1 and into the apertures 8 between wire elements 6 of belt 1. An effective seal can thus be obtained between rollers 24, 24a and the belt/cloth combination 1, 9 across opposite ends of vacuum chamber 16.

Spindle 28 of sealing rollers 24 and 24a are located relative to the end walls 16b of vacuum chamber 16 so that the peripheral surfaces 26a of the rollers are pressed into sealing engagement with the transversely disposed inner faces of end walls 16b. An effective seal can thus be obtained between rollers 24, 24a and vacuum chamber end walls 16b at opposite ends of vacuum chamber 16.

To enhance the sealing effect between rollers 24, 24a and the belt/cloth combination 1, 9 belt 1 may be guided to travel upwardly towards roller 24 from a position slightly below the upper region of roller 24 along the approach 30a towards the feed end 35a of vacuum chamber 16 and to travel downwardly away from roller 24a to a position slightly below the upper region of roller 24a along the departing run 30b away from vacuum chamber 16, as shown in figure 6.

The need for adequate sealing is most critical at the feed end 16a of vacuum chamber 16 and to improve further the sealing effect between sealing roller 24 and the belt/cloth combination 1, 9 atthat end, pinch roller 31 of similar construction as sealing rollers 24 and 24a may be provided above the belt/cloth combination 1, 9 to urge the latter into the resilient periphery of sealing roller 24.

In use, during continuous longitudinal movement of the belt/cloth combination 1, 9 relative to vacuum chamber 16, a solids-liquid feed material is fed continuously onto the operative run 33a of filter cloth 9 by feed means 32 located in a position near the feed end 16a of vacuum chamber 16. Suction is applied to outlets 17 from vacuum chamber 16 by means of the vacuum pump which is connected to outlet coupling 19. Filtrate is drawn from the feed material through filter cloth 9, directly through the apertures 8 in belt 1 over substantially the whole of the width of belt 1 and through the wide inlet 15 into vacuum chamber 16 from where it is withdrawn by the vacuum pump. A precipitate is retained on filter cloth 9 along operative run 33a and forms a filter cake (not shown) which is carried along and discharged from the continuously moving filter cloth 9. Scraper 34 may be provided to dislodge the filter cake. Liquid sprays (not shown) may be provided in suitable positions along return run 33b for washing the filter cloth 9.

Filter cloth 9 does not separate from belt 1 along the return run of the belt but the open grid-like construction of wire belt 1 permits effective washing of filter cloth 9 along the return run 33b.

With the invention a simple yet effective arrangement may be provided with which the problems encountered with conventional vacuum belt filters may be overcome or at least minimised.

It will be appreciated that many variations in detail are possible without departing from the scope of the appended claims.

CLAIMS:

1.      A belt filter including an endless conveyor belt adapted to be driven along a closed path including an operative run and a return run; and filter cloth round the conveyor belt, characterised in that the conveyor belt includes apertures therethrough over at least a major portion of its surface area; and the filter cloth is attached to the conveyor belt along the operative and return runs of the conveyor belt and is movable longitudinally with the conveyor belt along substantially the same closed path.

2.      A belt filter as claimed in claim 1, characterised in that the conveyor belt comprises an open grid-like or mesh-like structure which is flexible transversely.

3.      A belt filter as claimed in claim 1 or 2, characterised by drive means engageable with the conveyor belt, the engagement between the drive means and the conveyor belt acting to track the longitudinal movement of the conveyor belt.

4.    A belt filter as claimed in claim 3, characterised in that  the drive means comprises at least one sprocket engaging in apertures through the conveyor belt; and the conveyor belt includes at least one longitudinally extending guide formation adapted to co-operate with the sprocket to inhibit lateral movement of the conveyor belt.

5.    A belt filter as claimed in claim 4, characterised in that  the drive sprocket is located towards one end of the operative run of the conveyor belt; and at least one idler sprocket engageable in apertures through the conveyor belt is located towards the opposite end of the operative run of the conveyor belt, the guide formation on the conveyor belt also being adapted to co-operate with the idler sprocket to inhibit lateral movement of the conveyor belt.

6. A belt filter as claimed in claim 4 or 5, characterised in that the guide formation on the conveyor belt is constituted by longitudinally disposed portions of the surrounds of a row of apertures extending along the conveyor belt.

7. A belt filter as claimed in any one of the preceding claims, characterised by support means for the conveyor belt along the operative run.

8. A belt filter as claimed in claim 7, characterised in that the support means includes at least one longitudinally extending support member located underneath the conveyor belt.

9. A belt filter as claimed in any one of the preceding claims, characterised by a pair of guide formations for the opposite longitudinally extending edges of the conveyor belt along the operative run.

10. A belt filter as claimed in any one of the preceding claims, characterised in that it comprises a vacuum filter including a vacuum chamber which is located below the operative run of the conveyor belt and includes an inlet which extends along at least part of the operative run of the conveyor belt and extends over at least a major portion of the width of the conveyor belt-filter cloth combination so that apertures through the conveyor belt which pass along the vacuum chamber during operation are located in registration with the inlet.

11. A belt filter as claimed in claim 10, characterised in that the opposite, longitudinal edge zones of the filter cloth are unattached along the entire length of the conveyor belt, the unattached edges of the filter cloth being turned upwardly away from the conveyor belt along the operative run and located in sliding engagement with side formations which are mounted on the vacuum chamber in air-tight relationship therewith.

12. A belt filter as claimed in claim 11, characterised in that each side formation includes a replaceable lining on which an upturned edge of the filter cloth is slidable.

13. A conveyor belt-filter cloth combination characterised by an endless conveyor belt including apertures therethrough over at least a major portion of its surface area; and filter cloth over the outer surface of the conveyor belt, the filter cloth being attached to the conveyor belt along the entire length of the conveyor belt.

14. A conveyor belt-filter cloth combination as claimed in claim 13, characterised in that the conveyor belt comprises an open

- 6 -

grid-like or mesh-like structure which is flexible transversely.

15. A conveyor belt-filter cloth combination as claimed in claim 13 or 14, characterised in that the opposite longitudinal edge zones of the filter cloth are unattached and are adapted to be turned away from the conveyor belt.

Fig 1.

1/4

0020100

Fig 2.

Fig 3.

0020100

Fig 4.

Fig 5.

## Fig 6.

## Fig 7.

| Category | Citation of document with indication, where appropriate, of relevant passages | Relevant to claim | CLASSIFICATION OF THE APPLICATION (Int. Cl. 3) |
|---|---|---|---|
| **DOCUMENTS CONSIDERED TO BE RELEVANT** | | | |
| X | US - A - 4 137 169 (EL HINDI)  <br> * Column 4, lines 3-13, 55-68; figures * <br> -- | 1,2,7, 9-11, 13,14 | B 01 D 33/04 <br> 29/02 |
| | US - A - 3 977 514 (KAESS) <br> * Column 3, lines 1-18, 29-45; figures 1,6 * <br> -- | 1-7,10, 13,14 | |
| | GB - A - 735 813 (DELPARK CORP.) <br> * Page 2, lines 16-29; figures * <br> -- | 1-5,13, 14 | **TECHNICAL FIELDS SEARCHED (Int.Cl. 3)** |
| | US - A - 4 123 875 (HAVALDA) <br> * Column 4, lines 61-64; figures 1, 3,4 * <br> -- | 9,11, 15 | B 01 D 29/02 <br> 33/00 <br> 33/02 <br> 33/04 <br> 33/32 |
| D,A | US - A - 2 880 875 (ALSTON) | | |
| A | US - A - 3 358 834 (EL HINDI) | | |
| A | FR - A - 1 158 333 (CO.SE.MA.) | | |
| A | GB - A - 734 876 (C.A. SWALES) <br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20.08.1980 | HILD |

EPO Form 1503.1  06.78